# EUROPÄISCHE PATENTSCHRIFT

(11) **EP 4 253 669 B1**
(45) Veröffentlichungstag und Bekanntmachung des Hinweises auf die Patenterteilung: **26.11.2025**
(21) Anmeldenummer: 22164977.5
(22) Anmeldetag: 29.03.2022
(51) Int. Cl.: E02F 9/26, G01S 17/89, G06T 17/00, G06T 7/521

(54) **VERMESSUNGSSYSTEM FÜR EINE BAU- UND ARBEITSMASCHINE**
MEASURING SYSTEM FOR A BUILDING AND WORKING MACHINE
SYSTÈME DE MESURE POUR UNE MACHINE DE CONSTRUCTION ET DE TRAVAIL

(43) Veröffentlichungstag der Anmeldung: 04.10.2023
(73) Patentinhaber: MOBA Mobile Automation AG, 65555 Limburg (DE)
(72) Erfinder: Harms, Volker, 65555 Limburg (DE)
(74) Vertreter: Pfitzner, Hannes

(56) Entgegenhaltungen:
- EP-A1- 3 971 608
- WO-A1-2018/099755
- WO-A1-2020/041897
- US-A1- 2022 070 611
- US-A1- 2022 075 027
- US-A1- 2022 081 879

## Beschreibung

Ausführungsbeispiele der vorliegenden Erfindung beziehen sich auf ein Einmesssystem zum Kalibrieren einer Komponente einer Baumaschine. Weitere Ausführungsbeispiele beziehen sich auf ein entsprechendes Verfahren sowie Computerprogramm. Im Allgemeinen sind Ausführungsbeispiele der Erfindung auf dem Gebiet von mobilen Bau- und Arbeitsmaschinen, insbesondere Baumaschinen zum Bearbeiten und Abtragen von Erdreich, Fels oder einem Gesteins- oder Bodenmaterial, zu finden. Beispiele hierfür sind Bagger, Bulldozer, Grader, Bohrgerät bzw. Bohrmaschine, Rammgerät oder Schlitzwandfräse. Besondere Ausführungsbeispiele beziehen sich auf ein Vermessungssystem zum Einmessen oder Kalibrieren der Geometrie der Baumaschine und Arbeitsmaschine.

Fahrer von Erdbaumaschinen wie beispielsweise Bagger nutzen heutzutage immer öfter sogenannte Assistenzsysteme oder Steuerungssysteme, um bei Bauarbeiten die erforderlichen Arbeitsgänge präzise ausführen zu können. Die Assistenzsysteme oder Steuerungssysteme unterstützen und entlasten beispielsweise einen Baggerfahrer bei auszuführenden Arbeiten wie Ausschachten, Einbauen oder Aufschütten von Erde, Schotter, Sand oder anderem Baumaterial. Auch bei Arbeiten unter erschwerten Sichtbedingungen, wie beim Böschungsbau oder bei Arbeiten unter Wasser unterstützen und entlasten Assistenzsysteme oder Steuerungssysteme (sogenannte Baggersteuerungen) den Baggerfahrer. Die Informationen bezüglich der genauen Position des Baggers und des Baggerlöffels können dem Maschinenbediener grafisch auf dem Assistenzsystem oder dem Steuerungssystem angezeigt werden, so dass der Bediener die Informationen verwenden kann, während er die Maschine steuert.

Damit die Arbeitsgänge präzise ausgeführt werden können, muss das Werkzeug des Baggers sehr genau positioniert werden können. Dazu muss der Bagger vor Beginn der Arbeiten entsprechend eingemessen bzw. kalibriert werden, das heißt verschiedene Abmessungen, Abstände und Positionen von Baggerlöffel, Ausleger, Löffelstiel, Drehachsen usw. exakt ermittelt und in die Baggersteuerung eingegeben werden.

Bekannt sind Assistenzsysteme für Bau- und Arbeitsmaschinen wie beispielsweise die X-Site Baggersteuerung, welche Tiefe, Höhe und Neigung des Baggerlöffels mittels verschiedener Sensoren misst und die Baggerlöffelposition auf einer Anzeige- und Bedieneinheit in der Fahrerkabine des Baggers grafisch und numerisch abbildet. Ein weiteres bekanntes Assistenzsystem für Bau- und Arbeitsmaschinen ist die iDig-Baggersteuerung.

Hinsichtlich des Einmessens oder des Kalibrierens der Geometrie der Maschine ist aus dem Stand der Technik die EP 3 730 702 A1 von Novatron, Finnland, bekannt, welche eine Messanordnung für beispielsweise Erdbaumaschinen oder Hebemaschinen beschreibt, wobei die Messanordnung bei einer individuellen Kalibrierung jeder Maschine verwendet werden kann.

Weiterhin sei noch die EP 3 613 905 A1 von Bridgin, Frankreich, genannt, welche ein Nivellierungsführungssystem für Erdaushubmaschinen, wie beispielsweise Bagger, beschreibt. Das Führungssystem umfasst eine Winkelpositions-Erfassungsvorrichtung, eine Laserdetektionsvorrichtung und eine Steuervorrichtung. Die US 2022/070611 offenbart ein Verfahren zum Betreiben eines autonomen oder halbautonomen Fahrzeugs, das eine Erdformungsroutine an einem Standort durchführt. Die WO 2020/041897 A1 beschreibt ein System und ein Verfahren zum Monitoren von Fahrzeugen.

Nachteilig an den bekannten Systemen ist, dass ein Einmessen oder Kalibrieren der Geometrie der Maschine sehr komplex sowie sehr zeitaufwendig ist und meist neben einem Lot und einem Bandmaß noch andere spezielle Hilfsmittel erforderlich sind, wie beispielsweise eine oder mehrere Totalstationen. Auch bei dem bereits genannten iDig-Baggersystem, welches zwar einen automatischen Messmodus hat, ist das Einmessen oder Kalibrieren durchaus sehr zeitaufwendig. Deshalb besteht der Bedarf nach einem verbesserten Ansatz.

Aufgabe der vorliegenden Erfindung ist es, ein Konzept zur Verbesserung des Einmessvorgangs bzw. des Kalibriervorgangs von Baumaschinen zu schaffen.

Die Aufgabe wird durch den Gegenstand der unabhängigen Patentansprüche gelöst.

Ausführungsbeispiele der vorliegenden Erfindung schaffen ein Einmesssystem zum Kalibrieren einer Komponente, wie z. B. eines Baggerarmsegments oder einer Baggerschaufel, einer Baumaschine, insbesondere eines Baggers, eines Bulldozers, eines Graders, eines Bohrgeräts, eines Rammgeräts (Ramme) oder einer Schlitzwandfräse. Die Komponente umfasst zumindest einen Freiheitsgrad. Das Einmesssystem umfasst in der einfachsten Ausführung ein mobiles Gerät, wie z. B. ein Smart Device, Smartphone oder Tablet-PC sowie einen Prozessor. Das mobile Gerät weist einen LiDAR-Sensor auf. Der LiDAR-Sensor ist ausgebildet, mehrere Messpunkte der Komponente, z. B. Gelenkpunkte oder charakteristische Punkte und/oder Messpunkte der Baumaschine, zu erfassen, um so eine Positionsinformation für die mehreren Messpunkte der Komponente und/oder der Baumaschine zu bestimmen. Der Prozessor ist ausgebildet, ein 3D-Modell der Komponente und/oder der Baumaschine auf Basis der Positionsinformationen für die mehreren Messpunkte zu bestimmen. Weitere Merkmale sind durch die unabhängigen Patentansprüche definiert.

Entsprechend Ausführungsbeispielen können die Positionsinformationen Abstandsinformationen (gegenüber dem LiDAR-Sensor) oder 3D-Positionsinformationen aufweisen.

Ausführungsbeispiele der vorliegenden Erfindung basieren darauf, dass mittels eines handelsüblichen Smartphones mit einer Kamera mit LiDAR-Unterstützung (LiDAR-Sensorsystem) eine Baumaschine eingemessen bzw. kalibriert werden kann, indem die aufgenommenen Daten mittels einer entsprechenden Software-App bearbeitet werden. Die aufbereiteten Daten können dann z. B. einem Assistenzsystem (Steuerungssystem) zur Bedienung der Steuerung der Baumaschine (beispielsweise einer Baggersteuerung) zur Verfügung gestellt werden.

Hintergrund ist, dass inzwischen mobile Geräte, wie beispielsweise Smartphones, mit integrierten LiDAR-Sensorsystemen ausgestattet sind. Beispiele sind Apple iPhone 12 Pro, iPhone 13 Pro, iPad Pro. Der Vorteil besteht darin, dass das Einmessen durch einen Maschinenbediener erfolgen kann, das heißt es wird kein separater oder ausgebildeter Vermesser benötigt. Das führt zu einer erheblichen Zeit- und Kostenersparnis, da kein aufwändiges Einrichten oder Installieren von speziellen Messgeräten wie Totalstationen oder ähnlich notwendig ist.

LiDAR (light detection and ranging) ist eine Methode zur Abstandsmessung mithilfe der Lichtlaufzeitmessung. Dazu werden beispielsweise Laserstrahlen oder allgemein Lichtstrahlen ausgesendet und die Reflexion erfasst. Das heißt, trifft ein Laserstrahl auf ein Objekt und wird reflektiert, errechnet der Scanner anhand der Laufzeit des reflektierten Lichts die Entfernung zum Sensor bzw. iPhone bzw. iPad. Da der LiDAR-Scanner das Licht in einem Punktraster ausstrahlt, erfasst der Sensor mehrere Objektteile auf einmal und erstellt in Echtzeit ein 3D-Modell mit Tiefeninformationen.

Entsprechend Ausführungsbeispielen werden pro Komponente zumindest zwei Messpunkte erfasst. Bei der Komponente kann es sich beispielsweise um ein Segment einer Baumaschine, z. B. eines Baggers, handeln. Wenn beispielsweise zwei Punkte des Segments erfasst werden, so kann die Ausrichtung des Segments im Raum anhand der erfassten Positionen der zwei Messpunkte bestimmt werden. Hierdurch ist also dann eine 3D-Position je Messpunkt im Raum ableitbar, wobei durch die Vielzahl der Messpunkte bzw. die durch das LiDAR-System erfasste Punktwolke dazu genutzt werden kann, das 3D-Modell zu bestimmen. Entsprechend Ausführungsbeispielen erfolgt die Bestimmung in zwei Koordinaten mittels visuell, z.B. mit der in das mobile Gerät integrierten Kamera, wobei mittels der Laufzeitmessung eine entsprechende Tiefeninformation je 2D-Position bestimmt und zu einer 3D-Position erweitert wird. Das heißt also, dass durch eine Aufnahme einer Seitenansicht der Maschine/des Baggers mit dem Smartphone (Kamera und LiDAR-Sensor) alle wesentlichen Informationen erhalten sind. Hierdurch entsteht also eine dreidimensionale Positionsinformation in einem durch den LiDAR-Sensor definierten Koordinatensystem. Entsprechend Ausführungsbeispielen ist der LiDAR-Sensor ausgebildet, in mehrere Ausrichtungen des LiDAR-Sensors auf die Komponente und/oder Baumaschine die Messpunkte zu erfassen. Das ist beispielsweise dann vorteilhaft, wenn die Baumaschine zu groß ist, so dass sich die gesamte Baumaschine bzw. alle Komponenten der Baumaschine in einer Aufnahme erfasst werden können bzw. mittels einer Messung erfasst werden können. Hierbei kann vorteilhafterweise mittels einer Mensch-Maschine-Schnittstelle des mobilen Geräts dem Benutzer einen Hinweis dahin gehend geben, wie der LiDAR-Sensor auszurichten ist.

Die aufgenommenen Daten des LiDAR-Sensors bilden eine Punktwolke, auch wenn mehrere Aufnahmen durchgeführt wurden. Bezüglich der aufgenommenen Punktwolke sei angemerkt, dass aus selbiger der Bediener mittels der App jeden x-beliebigen Punkt an der Maschine auswählen und Abstand und Positionswerte, die für die Baggersteuerung relevant sind, bestimmen und in dem 3D-Modell markieren kann. Auch kann entsprechend weiteren Ausführungsbeispielen das Erfassen der Messpunkte in einer Pose der Komponente bzw. Baumaschine erfolgen oder alternativ auch in mehreren Posen. Bevorzugter Weise werden bei der Messung mehrere Komponenten, die jede für sich einen eigenen Freiheitsgrad und auch mehrere Freiheitsgrade aufweisen kann, erfasst. Beispiele für Komponenten sind Baggerschaufel, Segment des Baggerarms, weiteres Segment des Baggerarms. Entsprechend Ausführungsbeispielen ist der Prozessor ausgebildet, das 3D-Modell für die mehreren Komponenten zu bestimmen. Hierbei kann es vorteilhaft sein, wenn die Gelenke erkannt werden, so dass die Freiheitsgrade je Komponente bestimmt werden.

Entsprechend Ausführungsbeispielen kann beispielsweise mittels einer Mensch-Maschine-Schnittstelle ein oder mehrere Messpunkte definiert oder ausgewählt oder markiert werden. Der Benutzer kann so das Gelenk beispielsweise als Messpunkt markieren.

Der LiDAR-Sensor ist beispielsweise die Kamera des mobilen Geräts. Insgesamt ist der LiDAR-Sensor Teil eines LiDAR-Scanners, der beispielsweise auch noch Licht oder Laser emittieren kann. Entsprechend Ausführungsbeispielen ist der LiDAR-Scanner ausgebildet, Licht entsprechend an ein Punktraster zu emittieren. Dieses Licht wird zur Abstandsmessung (zur Generierung der Tiefeninformation) verwendet, und zwar auf Basis einer Laufzeitmessung der Lichtreflexion.

Entsprechend weiteren Ausführungsbeispielen wäre es denkbar, dass bestimmte Messpunkte markiert oder farbig markiert oder erhaben (bspw. nach oben gewölbt) sind. Insofern sind gegebenenfalls an der Maschine angebrachte Marke oder Etiketten (farbig und erhaben) dazu geeignet, um bei einer automatischen Erfassung der relevanten Messpunkte und notwendige Dimensionen die Erkennung zu unterstützen. Beispielsweise können als Messpunkte spezifische Punkte der Komponente und/oder der Baumaschine verwendet werden. Als spezifische Punkte gelten beispielsweise einer oder mehrere der Folgenden:
- Gelenk
- Virtueller Drehpunkt
- Fixpunkt
- Kontaktpunkt des Werkzeugs.

Entsprechend Ausführungsbeispielen weist das Einmesssystem eine drahtlose Schnittstelle zur drahtlosen Kommunikation mit einer Maschinensteuerung auf. So ist es vorteilhafterweise möglich, eine Datenübertragung der ermittelten Daten sowie der ermittelten Abstände/Positionen vom Smartphone zur Baggersteuerung in einfacher Weise zu ermöglichen. Dadurch, dass kein händischer Übertrag erfolgt, wird die Installation (Einmessung und Kalibrieren) erheblich vereinfacht und vermeidet Fehler, welche (wie im Stand der Technik durchaus üblich) beim manuellen Eintippen der Werte in die Baggersteuerung passieren können. An dieser Stelle sei angemerkt, dass die drahtlose Datenübertragung der ermittelten Daten sowie der ermittelten Abstände/Positionen vom Smartphone direkt zum Assistenzsystem (Assistenzsystem des Baggersystems bzw. Baggersteuerung) beispielsweise via WLAN oder Bluetooth erfolgen kann. Alternativ kann die drahtlose Datenübertragung der ermittelten Daten sowie der ermittelten Abstände/Positionen vom Smartphone zum Assistenzsystem (Baggersystem, Baggersteuerung) via Netzwerk (Cloud-Dienst, via Internetverbindung) erfolgen.

Entsprechend Ausführungsbeispielen umfasst das Einmesssystem eine Maschinensteuerung und/oder ein Maschinendisplay, bzw. umgekehrt, das Einmesssystem ist Teil der Maschinensteuerung. Beispielsweise kann die Baggersteuerung (Assistenzsystem, Steuerungssystem) eine Anzeige und Bedieneinheit umfassen, die z. B. aus einem Controller, einem Speicher, einer Anzeige (Display), einer Eingabe (Tastatur oder Touch-Bedienung) und Kommunikationsschnittstellen (für direkte Verbindung mit dem Smartphone und/oder für Cloud-Dienste, via Internetverbindung) besteht. Die Baggersteuerung (Assistenzsystem, Steuerungssystem) steht entsprechend weiteren Ausführungsbeispielen während des Einmess-Kalibriervorgangs in ständigem Kontakt mit der Smartphone-App (tauscht ständige Daten aus) und gibt dem Benutzer des Smartphones Hinweise, welche Daten (Referenzpunkte) noch aufgenommen werden sollten (müssen) und ob die Datenlage ausreichend genug ist (genügend Daten bzw. Referenzpunkte vorhanden). Bezüglich den Cloud-Diensten sei angemerkt, dass diese auch wie folgt genutzt werden können: Datenablage auf einem entfernten angeordneten Systemserver, mit Bezug zur jeweiligen vermessenen Maschine. Auf die Daten kann von unterschiedlichen Seiten her, das heißt vom Baggersystem auf der Maschine, vom Smartphone des Bedieners oder von woanders zugegriffen werden. Entsprechend Ausführungsbeispielen ist das Maschinendisplay ausgebildet, Position und/oder Stellungen der Komponenten auf Basis von einer oder mehreren Sensordaten zur Überwachung von einem oder mehreren Freiheitsgraden unter Berücksichtigung des 3D-Modells zu berechnen und/oder anzuzeigen. Hierbei kann die Maschinensteuerung beispielsweise die Berechnung der Position/Stellung der Komponente durchführen.

Ein weiteres Ausführungsbeispiel bezieht sich auf eine Baumaschine, insbesondere einen Bagger, Bulldozer, Grader, Bohrgerät, Rammgerät (Rammen) oder eine Schlitzwandfräse mit einem Einmesssystem gemäß obiger Erläuterung. Die Baumaschine kann ferner eine Maschinensteuerung umfassen. Insofern ist die hier beschriebene Lehre anwendbar auf verschiedene Baggertypen, Baggergrößen, das heißt unabhängig von Maschinen und Maschinengröße. Das heißt also, dass Ausführungsbeispiele auf andere Maschinen, die mit einem 3D-Positionierungs- und Steuerungssystem ausgerüstet sind, angewendet werden, und den Einmessvorgang bzw. Kalibriervorgang vor Beginn der Arbeiten verbessern. Weitere Maschinenbeispiele sind z. B. Bohrgeräte (Bohrmaschinen zur Sprenglochbohrung), Grader, Bulldozer oder Rammen (Rammgeräte oder Rammvorrichtungen zum Verdichten von Böden oder zum Eintreiben von Pfählen oder Pfahlrohren) oder Schlitzwandfräsen.

Weitere Ausführungsbeispiele beziehen sich auf ein Verfahren zum Einmessen einer Komponente einer Baumaschine mit folgenden Schritten:
- Erfassen mittels eines LiDAR-Sensors mehrerer Messpunkte der Komponente und/oder der Baumaschine, um eine Positionsinformation für die mehreren Messpunkte der Komponente und/oder der Baumaschine zu bestimmen;
- Bestimmen eines 3D-Modell der Komponente und/oder der Baumaschine auf Basis der Positionsinformation für die mehreren Messpunkte.

Entsprechend Ausführungsbeispielen kann das Verfahren auch noch den Schritt des Aufnehmens der Komponente und/oder der Baumaschine mittels einer Kamera des mobilen Geräts, z. B. einer Kamera des Smartphones, umfassen. Entsprechend einem weiteren Ausführungsbeispiel weist das Verfahren den Schritt des Berechnens und/oder Anzeigens einer Position und/oder Stellung der Komponente auf Basis von einer oder mehreren Sensordaten zum Überwachen von einem oder mehreren Freiheitsgraden unter Berücksichtigung des 3D-Modells auf.

An dieser Stelle sei angemerkt, dass ein weiteres Ausführungsbeispiel sich auf ein Computerprogramm bezieht, das einen Quellcode aufweist, der das Verfahren, wie eben erläutert, durchführt, wenn der Quellcode auf einem Prozessor läuft. Das Computerprogramm kann beispielsweise mittels einer App durchgeführt werden. Die installierte (3D-Scanner) App mit dem mobilen Gerät (Smartphone) ermöglicht das Einmessen der gesamten Maschine. Die der 3D-Scanner-App (beispielsweise von Laan Labs), erfasst über LiDAR Tiefeninformationen des Objekts und erstellt aus den aufgenommenen Punkten ein 3D-Modell der Maschine, welches bearbeitet werden kann.

Weiterbildungen sind in den Unteransprüchen definiert. Nachfolgend werden Ausführungsbeispiele der vorliegenden Erfindung anhand der beiliegenden Zeichnungen erläutert. Es zeigen:
- Fig. 1: eine schematische Darstellung einer Baumaschine, hier eines Baggers, zur Erläuterung von Ausführungsbeispielen;
- Fig. 2: eine schematische Darstellung eines mobilen Geräts mit einem LiDAR-Sensor eine Kalibrierung einer Baumaschine (hier eines Baggers aus Fig. 1) gemäß Ausführungsbeispielen;
- Fig. 3: eine schematische Darstellung eines Systems umfassend das mobile Gerät aus Fig. 2 in Vernetzung mit einem Cloud-Service und/oder einer Baumaschinensteuerung gemäß Ausführungsbeispielen; und
- Fig. 4: eine schematische Darstellung eines mobilen Geräts mit einem LiDAR-Sensor eine Kalibrierung einer Baumaschine (hier eines Bohrers) gemäß Ausführungsbeispielen.

Bevor nachfolgend Ausführungsbeispiele anhand der beiliegenden Zeichnungen erläutert werden, wird darauf hingewiesen, dass gleichwirkende Elemente und Strukturen mit gleichen Bezugszeichen versehen sind, so dass die Beschreibung derer aufeinander anwendbar bzw. austauschbar ist.

Bei nachfolgender Erläuterung wird die Erfindung bzw. Ausführungsbeispiele der Erfindung anhand eines Baggers beschrieben. Allerdings ist die Erfindung auch auf andere Maschinen, die mit einem 3D-Positionierungs- und Steuerungssystem ausgerüstet sind, anwendbar.

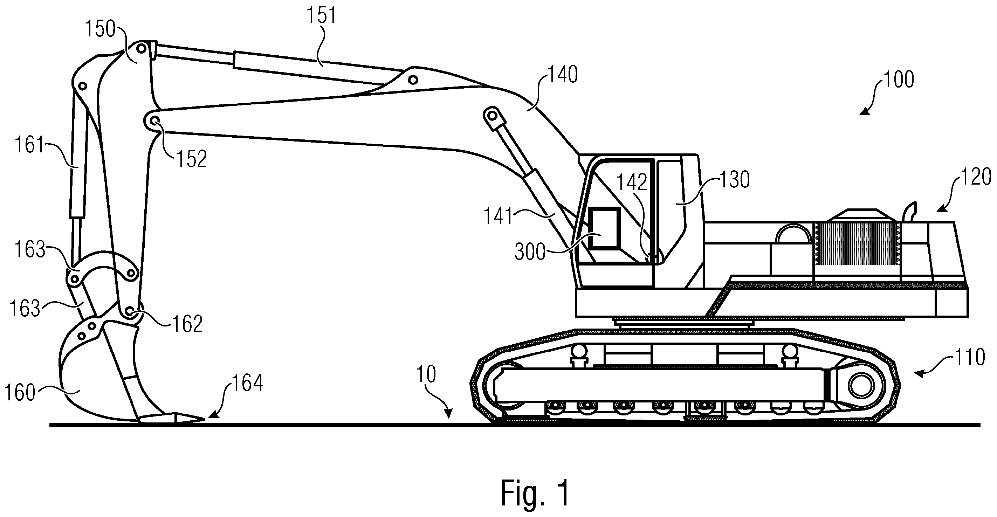

Fig. 1 zeigt schematisch einen konventionellen Bagger 100. Anhand dieses Baggers 100 wird die Problematik beim Kalibrieren bzw. Einmessen erläutert. Die Erkenntnis dieser Problematik ist Teil der Erfindung. Der Bagger 100 ist in Fig. 1 in einer seitlichen Ansicht dargestellt und weist einen Unterwagen 110 und einen Oberwagen 120 auf. Der Oberwagen 120 ist drehbar über einen Drehkranz mit dem Unterwagen 110 verbunden. Der Unterwagen 110 umfasst Räder oder (wie abgebildet) Raupenketten zum Bewegen des Baggers 100 auf einem Untergrund 10. Am Oberwagen 120 des Baggers 100 ist eine Kabine 130 angeordnet, in der ein Bediener des Baggers 100 sitzen und die verschiedenen Bewegungen der Maschine 100 steuern kann.

Der Bagger 100 umfasst weiterhin einen Ausleger 140, der an einem ersten Drehgelenk 142 drehbar an dem Oberwagen 120 befestigt ist, einen Löffelstiel 150, der an einem zweiten Drehgelenk 152 drehbar an dem Ausleger 140 befestigt ist, und einen Baggerlöffel 160, der an einem dritten Drehgelenk 162 drehbar an dem Löffelstiel 150 befestigt ist. Der Ausleger 140 und der Löffelstiel 150 bilden Tragelemente, die den Baggerlöffel 160 tragen und positionieren. Die Hydraulikzylinder 141, 151 und 161 werden betätigt, um jeweils eine relative Bewegung des Auslegers 140 im Verhältnis zu dem Oberwagen 120, des Löffelstiels 150 im Verhältnis zu dem Ausleger 140 und des Baggerlöffels 160 im Verhältnis zu dem Löffelstiel 150 zu verursachen. Der Hydraulikzylinder 161 ist über Umlenkhebel 163 mit dem Baggerlöffel 160 verbunden. Der Baggerlöffel 160 umfasst eine Schneidkante 164, die Kerbzähne aufweisen kann.

Am Ausleger 140, am Löffelstiel 150 und am Baggerlöffel 160 sowie am Oberwagen 120 des Baggers 100 sind üblicherweise weitere, in den Figuren nicht dargestellte Sensoren wie Neigungssensoren und Laserdetektoren sowie Positionsbestimmungseinrichtungen (GNSS/GPS-Empfänger) angeordnet, welche das 3D Positionierungs- und Steuerungssystem (Assistenzsystem/Baggersteuerung 300) benötigt. Dabei sind die Positionsbestimmungseinrichtungen (GNSS/GPS-Empfänger) vorzugsweise am Oberwagen 120 angeordnet und dienen der Erfassung von Position und Ausrichtung des Baggers 100. Um die Genauigkeit der Positionsbestimmung zu verbessern, können die Positionsbestimmungseinrichtungen (GNSS/GPS-Empfänger) dazu ausgebildet sein, ein Positionssignal in Kombination mit einem Korrektursignal, z. B. einem Korrektursignal von einem stationären Sender oder einem geostationären Sender, zu erhalten oder um ein Positionssignal in Kombination mit einem Zusatzsignal (z. B. von einem stationären oder geostationären Sender) zu erhalten. Mit den Neigungssensoren und Laserdetektoren können Neigung, Höhe und Lage von Ausleger 140, Löffelstiel 150 und Baggerlöffel 160 ermittelt werden. Ist der Bagger 100 zusätzlich mit einem Tiltrotator zum Schwenken und Drehen des Baggerlöffels 160 ausgestattet, so kommen noch weitere Sensoren hinzu, um alle Bewegungsmöglichkeiten des Baggers 100 und des Baggerlöffels 160 zu erfassen.

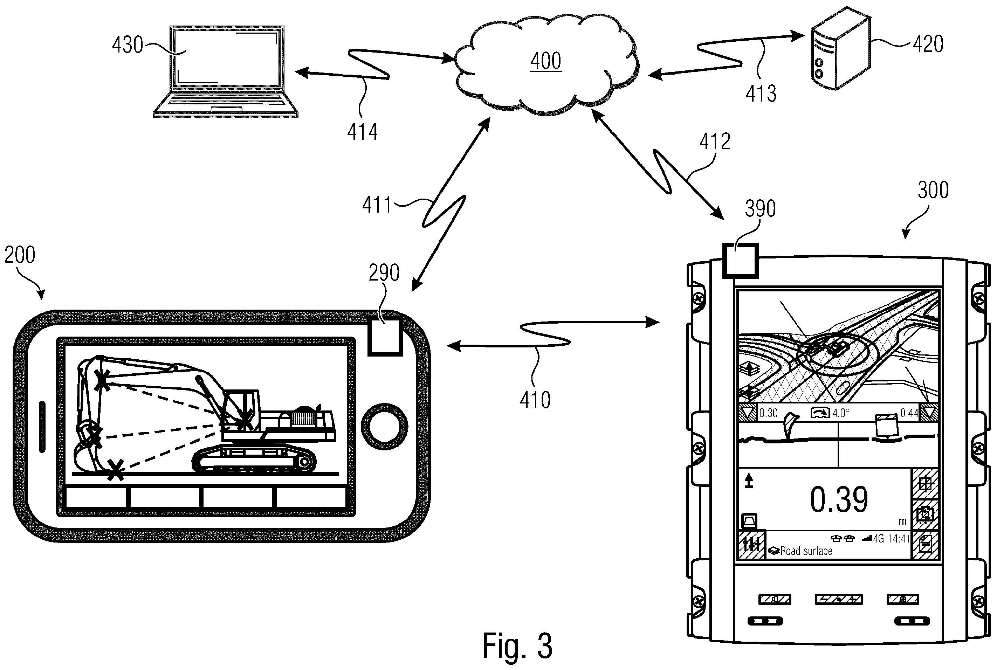

In der Kabine 130 ist eine Anzeige- und Bedieneinheit der Baggersteuerung 300 angeordnet, auf der die exakte Position des Baggerlöffels 160 und des Baggers 100 dem Bediener in Echtzeit dargestellt wird (siehe auch Figur 3). Neben der Anzeige- und Bedieneinheit umfasst die Baggersteuerung 300 noch weitere, in den Figuren nicht dargestellte Komponenten wie eine Prozessrechnereinheit (Berechnungseinheit), eine Speichereinheit sowie ein oder mehrere Datenkommunikationsschnittstellen 390. Die Prozessrechnereinheit verarbeitet beispielsweise Messwerte von Sensoren, Detektoren sowie Positionsbestimmungseinrichtungen und stellt diese auf dem Grafikdisplay der Anzeige- und Bedieneinheit der Baggersteuerung 300 dar. In der Speichereinheit können Daten wie beispielsweise vorgefertigte 3D-Geländemodelle abgelegt sein, welche mithilfe der Prozessrechnereinheit geladen werden können. Ein solches 3D-Modell kann beispielsweise ein herzustellendes Geländeprofil oder ein Aufmaß und Profil eines zu bauenden Kanals oder einer auszuhebenden Baugrube sein. Alle genannten Komponenten wie die Anzeige- und Bedieneinheit, die Prozessrechnereinheit (Berechnungseinheit), die Speichereinheit und die Datenkommunikationsschnittstellen 390 der Baggersteuerung 300 sind vorzugsweise in einem Gerät bzw. in einem Gehäuse integriert, an welchem die Sensoren, Detektoren sowie Positionsbestimmungseinrichtungen elektrisch angeschlossen sind, entweder drahtgebunden per Kabel oder drahtlos als Funkkomponenten.

3D-Geländemodelle können aber auch mithilfe der auf der Maschine 100 angeordneten Baggersteuerung 300 und den damit verbundenen Sensoren, Detektoren sowie Positionsbestimmungseinrichtungen erstellt und gespeichert werden, wenn das eigentliche Geländemodell nicht zur Verfügung steht. Dazu werden Markierungspunkte auf der Baustelle mit der Maschine 100 angefahren und mit dem Löffel 160 gemessen.

Um den Baggerlöffel, der eine Komponente der Baumaschine bzw. des Baggers 100 darstellt, sehr genau positionieren zu können, wird der Bagger 100 vor Beginn der Arbeit entsprechend eingemessen. Das erfolgt häufig händisch. Hierbei werden der Baggersteuerung 300 die gemessenen Werte übergeben, um die Kalibrierung durchzuführen. Das heißt, es müssen die Positionen des Baggerlöffels 160, insbesondere die Position der Schneidkante 164 des Baggerlöffels, und der Drehgelenke 142, 152 und 162 des Auslegers 140, des Löffelstiels 150 und des Baggerlöffels 160 ermittelt und in die Baggersteuerung 300 eingegeben werden.

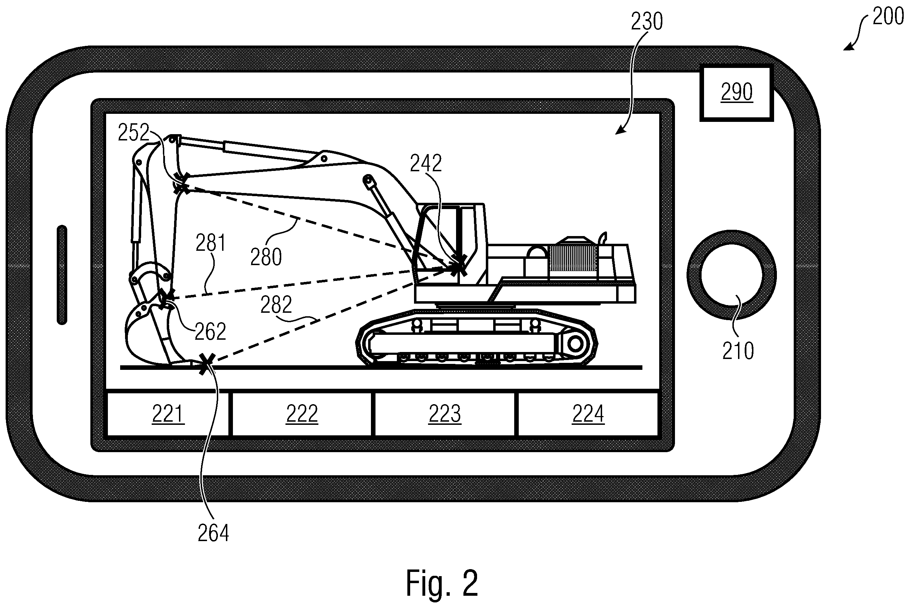

Der Einmess- bzw. Kalibriervorgang kann gemäß Ausführungsbeispielen der vorliegenden Erfindung durch ein automatisiertes Einmessen verbessert werden. Zum Ermitteln der genannten Positionen sowie verschiedener Abmessungen und Abstände, beispielsweise ein Abstand zwischen dem Drehgelenk des Auslegers 142 und der Löffelspitze 164 (Schneidkante), kann ein handelsübliches Smartphone 200 mit LiDAR Sensorsystem und einer entsprechenden Software-App (3D Scanner App) verwendet werden, wie in den Figuren 2 und 3 darstellt.

Mit dem Smartphone 200 wird, beispielsweise durch Betätigen einer Bedientaste 210, ein Bild des in Figur 1 dargestellten Baggers 100 in seitlicher Ansicht aufgenommen und im Anzeigebereich 230, d. h. auf dem Display des Smartphones 200 dargestellt. Mithilfe des LiDAR Sensorsystems und der Software-App (3D Scanner App) lässt sich nun ein 3D-Modell des Baggers 100 erstellen, welches aus vielen einzelnen Punkten besteht, d. h. eine Punktwolke aus vielen Einzelkoordinaten bildet. Hieraus lässt sich die Geometrie des Baggers 100 binnen kurzer Zeit präzise vermessen, indem aus allen aufgenommenen Punkten nur die für die Kalibrierung der Baggersteuerung 300 relevanten Punkte weiterbearbeitet werden. Über die Bedienfunktionen 221 bis 224 kann die 3D Scanner App bedient werden, d. h. verschiedene Funktionalitäten ausgewählt werden wie beispielsweise Markierungen im Bild setzen oder eine Distanz zwischen zwei gesetzten Markierungen (Positionen) berechnen.

Wie in Figur 2 dargestellt, so ist der auf dem Bild dargestellte Bagger 100 an den folgenden vier Positionen mit Markierungen versehen: Am Drehgelenk des Auslegers 142 (Markierung 242), am Drehgelenk des Löffelstiels 152 (Markierung 252), am Drehgelenk des Baggerlöffels 162 (Markierung 262) und an der Löffelspitze (Schneidkante) 164 (Markierung 264). Mithilfe der Software-App (3D Scanner App) lassen sich nun Abstände zwischen jeweils zwei Positions- bzw. Markierungspunkten ermitteln, so zum Beispiel ein Abstand 280 zwischen dem Drehgelenk des Auslegers 142 und dem Drehgelenk des Löffelstiels 152, ein Abstand 281 zwischen dem Drehgelenk des Auslegers 142 und dem Drehgelenk des Baggerlöffels 162 und ein Abstand 282 zwischen dem Drehgelenk des Auslegers 142 und der Löffelspitze (Schneidkante) 164. Mit der Software-App (3D Scanner App) lassen sich noch weitere Markierungen in dem 3D-Modell setzen und somit weitere Abstandswerte ermitteln, beispielsweise ein Abstand zwischen dem Drehgelenk des Löffelstiels 152 und der Löffelspitze (Schneidkante) 164.

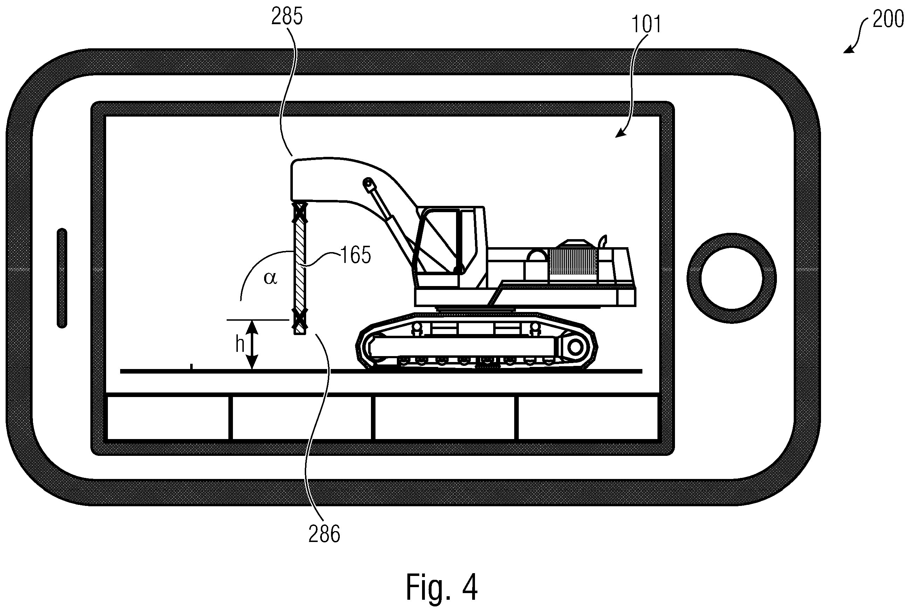

Bei obigen Ausführungsbeispielen wurde davon ausgegangen, dass eine komplexe Geometrie, hier eines Baggers mit mehr als zwei Freiheitsgraden, einzumessen ist. Dieser komplexe Ansatz kann entsprechend Ausführungsbeispielen auch auf einfache Maschinen, wie z. B. eine Erd-Bohrmaschine, übertragen werden. Eine Bohrmaschine ist in Fig. 4 dargestellt.

Fig. 4 zeigt ein mobiles Gerät 200, das einen LiDAR-Sensor, z. B. komplett über die Kamera, aufweist. Mittels der Kamera wird eine Baumaschine 101, hier eine Bohrmaschine 101, an der Seite aufgenommen. Die Bohrmaschine 101 weist als zu kalibrierendes Werkzeug den Bohrer 165 (entsprechende Komponente) auf. Beispielsweise sind bei der Inbetriebnahme die zwei Werte Neigungswinkel α des Bohrers 165 und Höhe H der Bohrspitze 164 (entsprechende Komponente) erforderlich. Diese können anhand der Positionen der Anfangs- und Endpunkte des Bohrwerkzeugs 165 bestimmt werden. Die Anfangs- und Endpunkte sind mit den Bezugszeichen 285 und 286 versehen. Anhand der Position 286 ist die Höhe ermittelbar. Anhand der Relativendpositionen zwischen den Punkten 285 und 286 ist der Winkel α bestimmbar.

Zur Bestimmung wird die Baumaschine 101 aufgenommen, z. B. von der Seite unter Zuhilfenahme des mobilen Geräts 200 bzw. der Kamera des mobilen Geräts 200. Die Kamera ermittelt gleichzeitig noch die Abstände zu den Punkten 285 und 286. Ausgehend von dieser Information sind die 3D-Positionen der Messpunkte 285 und 286 bestimmbar. Die Bestimmung erfolgt durch den Prozessor, z. B. den Prozessor des Smartphones 200. Der Prozessor ist ferner ausgebildet, um ein 3D-Modell der Komponente, hier des Bohrers 165 oder sogar ein 3D-Modell der Komponente 161 zusammen mit der Baumaschine 101 zu bestimmen. Dieses 3D-Modell kann dann an die Baumaschinensteuerung übergeben werden. Die Baumaschine kennt, z. B. zum Zeitpunkt der Kalibrierung, die eigenen Sensorwerte bzw. die eigenen Aktorpositionen, wie sie angefahren wurden, und kann so einen Abgleich zwischen einer Höhe des Werkzeugs oder Stellung des Werkzeugs und den Aktorpositionen durchführen. Um die Freiheitsgrade bestimmen zu können oder einzumessen, mit welcher Ansteuerung der Aktorik welche 3D-Position der Komponente erreicht wird, können die Schritte des Einmessens für mehrere Posen wiederholt werden.

Der Bediener führt also folgende Schritte durch. Die Baumaschine wird in eine Ausgangsstellung, z. B. eine abgeschätzte Arbeitsstellung, gebracht. Im nächsten Schritt wird dann die Baumaschine durch eine oder mehrere LiDAR-Aufnahmen, erhalten mittels des mobilen Geräts 200, vermessen. Im dritten Schritt werden dann für mehrere Messpunkte zugeordnet zu der Komponente der Baumaschine oder der Baumaschine die 3D-Positionen im Raum ermittelt. Diese 3D-Positionen werden dann in einem vierten Schritt verarbeitet, um ein 3D-Modell der Komponente und/oder der Baumaschine zu erhalten. Dieses 3D-Modell kann dann in einem fünften Schritt, z. B. drahtlos, an die Baumaschine übergeben werden.

An dieser Stelle sei angemerkt, dass einige Schritte hierbei optional sind und auch dass die Reihenfolge variieren kann.

Entsprechend Ausführungsbeispielen kann auch eine Interaktion zwischen Benutzer und Smart Device während des Vermessens erfolgen. Beispielsweise können einzelne Punkte, wie z. B. Gelenke im Smart Device bzw. auf dem Display des Smart Device, markiert werden, um so weitere Informationen dem 3D-Modell hinzuzufügen. Entsprechend weiteren Ausführungsbeispielen kann das Ermitteln der 3D-Positionen auch durch die Software des Smart Device geführt sein. Beispielsweise kann der Benutzer angeleitet werden beim Ausrichten des Smart Device, um mittels LiDAR die 3D-Positionen exakt zu vermessen. Denkbar wäre zum Beispiel, dass das Smart Device dem Benutzer kommuniziert, dass die Baumaschine aus unterschiedlichen Winkeln aufzunehmen ist.

Das Smartphone 200 umfasst weiterhin eine Datenkommunikationsschnittstelle 290 wie beispielsweise WLAN oder Bluetooth oder dergleichen, um Daten drahtlos zu anderen Geräten zu senden oder von anderen Geräten zu empfangen. So können beispielsweise Daten des 3D-Modells wie markierte Positionen oder ermittelte Abstandswerte über einen direkten Datenkommunikationsweg 410 drahtlos vom Smartphone 200 aus an die Baggersteuerung 300 übertragen werden. Denkbar ist es jedoch auch, dass die Daten des 3D-Modells vom Smartphone 200 aus über Datenkommunikationswege 411, 413 und 414 sowie über ein Netzwerk 400 an einen Datenserver 420 und/oder an einen Laptop oder PC 430 zur weiteren Bearbeitung oder dortigen Ablage/Speicherung übertragen werden können. Der Zugriff auf die Daten kann dabei beispielsweise über Cloud-Dienste oder dergleichen erfolgen.

Die Baggersteuerung 300 ist dazu ausgebildet, über die Datenkommunikationsschnittstelle 390 und über Datenkommunikationswege 412 und 413 sowie über das Netzwerk 400 Daten von dem Datenserver 420 abzurufen und/oder auf dem Datenserver 420 abzulegen. Der Zugriff auf die Daten kann auch hierbei beispielsweise über Cloud-Dienste oder dergleichen erfolgen.

Die Erfindung ist auch auf andere Maschinen wie bspw. mobile Bohrgeräte/Bohrmaschinen anwendbar. Bei derartigen Maschinen, die mit einem 3D Positionierungs- und Steuerungssystem ausgerüstet sind, ist es bspw. zur Sprenglochbohrung erforderlich, exakt parallele Löcher zu bohren sowie alle Löcher gleich tief und in einem exakt selben Winkel zu bohren. Das Ausrichten der Maschine ist ein zusätzlicher Schwierigkeitsfaktor bei der Neigungsausrichtung des Bohrarms (vgl. Fig. 4). Bei falsch gesetzten Bohrungen kann es bei Sprengungen zu Steinschlag und einer unsauberen Abbruchkante kommen. Auch auf Rammen, Rammgeräte oder Rammvorrichtungen ist die Erfindung anwendbar, bspw. beim Bau von Pfahlgründungen. Rammen werden beispielsweise zum Verdichten von Böden oder sonstiger Baumaterialien, insbesondere aber zum Eintreiben von Pfählen oder Pfahlrohren oder Ähnlichem verwendet. Weiterhin ist die Erfindung auch auf andere Spezialmaschinen wie Schlitzwandfräsen, welche zur Herstellung von Schlitzwänden für Baugrubensicherungen, Abdichtungen und Gründungen dienen, anwendbar.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Ein erfindungsgemäß codiertes Signal, wie beispielsweise ein Audiosignal oder ein Videosignal oder ein Transportstromsignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden

Das erfindungsgemäße kodierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren auf-gezeichnet ist. Der Datenträger, das digitale Speichermedium oder das computerlesbare Medium sind typischerweise gegenständlich und/oder nicht-vergänglich bzw. nicht-vorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Einmesssystem zum Kalibrieren einer Komponente (140, 150, 160, 161, 162, 163, 164, 165) einer Baumaschine (100, 101), insbesondere eines Baggers, eines Bulldozers, eines Graders, eines Bohrgeräts, eines Rammgeräts oder einer Schlitzwandfräse, wobei die Komponente (140, 150, 160, 161, 162, 163, 164, 165) zumindest einen Freiheitsgrad aufweist, mit folgenden Merkmalen:
einem mobilen Gerät (200) mit einem LiDAR-Sensor, wobei der LiDAR-Sensor ausgebildet ist, mehrere Messpunkte der Komponente (140, 150, 160, 161, 162, 163, 164, 165) und/oder der Baumaschine (100, 101) zu erfassen, um eine Positionsinformation für die mehreren Messpunkte der Komponente (140, 150, 160, 161, 162, 163, 164, 165) und/oder der Baumaschine (100, 101) zu bestimmen;
einem Prozessor, der ausgebildet ist, ein 3D-Modell der Komponente (140, 150, 160, 161, 162, 163, 164, 165) und/oder der Baumaschine (100, 101) auf Basis der Positionsinformation für die mehreren Messpunkte zu bestimmen;
wobei das mobile Gerät (200) durch ein Smart Device, Smartphone, oder Tablet-PC gebildet ist;
wobei das Erfassen ein Aufnehmen der Komponente (140, 150, 160, 161, 162, 163, 164, 165) und/oder der Baumaschine (100, 101) mittels einer Kamera in dem mobilen Gerät (200) umfasst.

2. Einmesssystem gemäß Anspruch 1, wobei die Positionsinformation eine Abstandsinformation ausgehend von dem LiDAR-Sensor umfasst; und/oder
wobei die Positionsinformation eine 3D-Positionsinformation im Raum umfasst; und/oder
wobei die Positionsinformation eine 3D-Positionsinformation in einem durch den LiDAR-Sensor definierten Koordinatensystem umfasst.

3. Einmesssystem gemäß einem der vorherigen Ansprüche, wobei das 3D-Modell eine Tiefeninformation umfasst; und/oder
wobei eine 3D-Position jeder Komponente (140, 150, 160, 161, 162, 163, 164, 165) durch mindestens zwei Messpunkte der Komponente (140, 150, 160, 161, 162, 163, 164, 165) bestimmt wird.

4. Einmesssystem gemäß einem der vorherigen Ansprüche, wobei der LiDAR-Sensor ausgebildet ist, in mehreren Ausrichtungen des LiDAR-Sensors auf die Komponente (140, 150, 160, 161, 162, 163, 164, 165) und/oder Baumaschine (100, 101) die Messpunkte zu erfassen; und/oder
wobei das Erfassen der mehreren Messpunkte in einer Pose der Komponente (140, 150, 160, 161, 162, 163, 164, 165) und/oder der Baumaschine (100, 101) erfolgt; oder wobei das Erfassen der Messpunkte in mehreren Posen der Komponente (140, 150, 160, 161, 162, 163, 164, 165) und/oder der Baumaschine (100, 101) erfolgt.

5. Einmesssystem gemäß einem der vorherigen Ansprüche, wobei der LiDAR-Sensor ausgebildet ist, Positionsinformationen für die mehreren Messpunkte mehrerer Komponenten (140, 150, 160, 161, 162, 163, 164, 165) mit mehreren Freiheitsgraden zu bestimmen; und/oder
wobei der Prozessor, der ausgebildet ist, das 3D-Modell inklusiver der mehreren Komponenten (140, 150, 160, 161, 162, 163, 164, 165) zu bestimmen.

6. Einmesssystem gemäß einem der vorherigen Ansprüche, wobei das mobile Gerät (200) eine Mensch-Maschine-Schnittstelle aufweist, über welche ein oder mehrere Messpunkte definierbar und/oder durch einen Benutzer markierbar sind; und/oder
wobei das mobile Gerät (200) eine Mensch-Maschine-Schnittstelle aufweist, die ausgebildet ist, einem Benutzer einen Hinweis bezüglich der Ausrichtung des LiDAR-Sensors zu geben.

7. Einmesssystem gemäß einem der vorherigen Ansprüche, wobei der LiDAR-Sensor ausgebildet ist, eine Punktwolke für die mehreren Messpunkte zu bestimmen.

8. Einmesssystem gemäß einem der vorherigen Ansprüche, wobei der LiDAR-Sensor Teil eines LiDAR-Scanners ist; und/oder
wobei der LiDAR-Sensor Teil eines LiDAR-Scanners ist, der ausgebildet ist, Licht in Entsprechung an ein Punktraster zu emittieren.

9. Einmesssystem gemäß einem der vorherigen Ansprüche, wobei der LiDAR-Sensor ausgebildet ist, eine Abstandsmessung auf Basis einer Lichtreflexion und/oder eine Laufzeitmessung einer Lichtreflexion durchzuführen.

10. Einmesssystem gemäß einem der vorherigen Ansprüche, wobei der LiDAR-Sensor ausgebildet ist, an der Baumaschine (100, 101) oder der Komponente (140, 150, 160, 161, 162, 163, 164, 165) angeordnete markierte, farbig markierte und/oder erhabene Messpunkte zu bestimmen;
wobei die mehreren Messpunkte durch spezifische Punkte der Komponente (140, 150, 160, 161, 162, 163, 164, 165) und/oder der Baumaschine (100, 101) aus einer Gruppe geformt sind, wobei die Gruppe folgende spezifische Punkte umfasst:
- Gelenk
- Virtueller Drehpunkt
- Fixpunkt
- Kontaktpunkt des Werkzeugs.

11. Einmesssystem gemäß einem der vorherigen Ansprüche, wobei das Einmesssystem eine Schnittstelle (390) zur drahtlosen Kommunikation mit einer Maschinensteuerung aufweist.

12. Einmesssystem gemäß einem der vorherigen Ansprüche, wobei das Einmesssystem eine Maschinensteuerung und/oder ein Maschinendisplay aufweist,
wobei das Maschinendisplay ausgebildet ist, Position und/oder Stellungen der Komponente (140, 150, 160, 161, 162, 163, 164, 165) auf Basis von ein oder mehreren Sensordaten zur Überwachung von einem oder mehreren Freiheitsgraden unter Berücksichtigung des 3D-Modells zu berechnen und/oder anzuzeigen;
wobei die Maschinensteuerung ausgebildet ist, Position und/oder Stellung der Komponente (140, 150, 160, 161, 162, 163, 164, 165) auf Basis von ein oder mehreren Sensordaten zur Überwachung von einem oder mehreren Freiheitsgraden unter Berücksichtigung des 3D-Modells zu berechnen.

13. Baumaschine (100, 101), insbesondere Bagger, Bulldozer, Grader, Bohrgerät, Rammgerät oder Schlitzwandfräse, mit einem Einmesssystem gemäß einem der vorherigen Ansprüche sowie einer Maschinensteuerung.

14. Verfahren zur Einmessung einer Komponente (140, 150, 160, 161, 162, 163, 164, 165) einer Baumaschine (100, 101), insbesondere eines Baggers, eines Bulldozers, eines Graders, eines Bohrgeräts, eines Rammgeräts oder einer Schlitzwandfräse, wobei die Komponente (140, 150, 160, 161, 162, 163, 164, 165) zumindest einen Freiheitsgrad aufweist, mit folgenden Schritten:
Erfassen mittels eines LiDAR-Sensors eines mobilen Geräts (200) mehrerer Messpunkte der Komponente (140, 150, 160, 161, 162, 163, 164, 165) und/oder der Baumaschine (100, 101), um eine Positionsinformation für die mehreren Messpunkte der Komponente (140, 150, 160, 161, 162, 163, 164, 165) und/oder der Baumaschine (100, 101) zu bestimmen;
Bestimmen eines 3D-Modells der Komponente (140, 150, 160, 161, 162, 163, 164, 165) und/oder der Baumaschine (100, 101) auf Basis der Positionsinformation für die mehreren Messpunkte;
wobei das mobile Gerät (200) durch ein Smart Device, Smartphone, oder Tablet-PC gebildet ist; wobei das Erfassen ein Aufnehmen der Komponente (140, 150, 160, 161, 162, 163, 164, 165) und/oder der Baumaschine (100, 101) mittels einer Kamera in dem mobilen Gerät (200) umfasst.

15. Verfahren nach Anspruch 14, wobei das Erfassen ein Aufnehmen der Komponente (140, 150, 160, 161, 162, 163, 164, 165) und/oder der Baumaschine (100, 101) mittels einer Kamera des mobilen Geräts (200) umfasst; und/oder
wobei das Verfahren den Schritt des Berechnens und/oder Anzeigen einer Position und/oder Stellung der Komponente (140, 150, 160, 161, 162, 163, 164, 165) auf Basis von ein oder mehreren Sensordaten zur Überwachung von einem oder mehreren Freiheitsgraden unter Berücksichtigung des 3D-Modells umfasst.

16. Computerprogramm zum Durchführen des Verfahrens nach Anspruch 14 oder 15, wenn das Verfahren auf einem Prozessor gemäß einem Einmesssystem gemäß einem der Ansprüche 1-13 abläuft.

## Claims

1. A calibration system for calibrating a component (140, 150, 160, 161, 162, 163, 164, 165) of a construction machine (100, 101), in particular an excavator, a bulldozer, a grader, a drill rig, a pile driver or a diaphragm wall cutter, wherein the component (140, 150, 160, 161, 162, 163, 164, 165) comprises at least one degree of freedom, comprising:
a mobile device (200) having a LiDAR sensor, wherein the LiDAR sensor is configured to detect a plurality of measurement points of the component (140, 150, 160, 161, 162, 163, 164, 165) and/or the construction machine (100, 101) to determine position information for the plurality of measurement points of the component (140, 150, 160, 161, 162, 163, 164, 165) and/or the construction machine (100, 101);
a processor configured to determine a 3D model of the component (140, 150, 160, 161, 162, 163, 164, 165) and/or the construction machine (100, 101) based on the position information for the plurality of measurement points;
wherein the mobile device (200) is formed by a smart device, smartphone, or tablet PC;
wherein detecting comprises recording the component (140, 150, 160, 161, 162, 163, 164, 165) and/or the construction machine (100, 101) by means of a camera in the mobile device (200).

2. The calibration system according to claim 1, wherein the position information comprises distance information starting from the LiDAR sensor; and/or
wherein the position information comprises 3D position information in space; and/or
wherein the position information comprises 3D position information in a coordinate system defined by the LiDAR sensor.

3. The calibration system according to any of the preceding claims, wherein the 3D model comprises depth information; and/or
wherein a 3D position of each component (140, 150, 160, 161, 162, 163, 164, 165) is determined by at least two measurement points of the component (140, 150, 160, 161, 162, 163, 164, 165).

4. The calibration system according to any of the preceding claims, wherein the LiDAR sensor is configured to detect the measurement points in a plurality of orientations of the LiDAR sensor to the component (140, 150, 160, 161, 162, 163, 164, 165) and/or construction machine (100, 101); and/or
wherein detecting the plurality of measurement points is performed in one pose of the component (140, 150, 160, 161, 162, 163, 164, 165) and/or the construction machine (100, 101); or wherein detecting the measurement points is performed in a plurality of poses of the component (140, 150, 160, 161, 162, 163, 164, 165) and/or the construction machine (100, 101).

5. The calibration system according to any of the preceding claims, wherein the LiDAR sensor is configured to determine position information for the plurality of measurement points of a plurality of components (140, 150, 160, 161, 162, 163, 164, 165) having a plurality of degrees of freedom; and/or
wherein the processor is configured to determine the 3D model including the plurality of components (140, 150, 160, 161, 162, 163, 164, 165).

6. The calibration system according to any of the preceding claims, wherein the mobile device (200) comprises a human-machine interface via which one or more measurement points can be defined and/or marked by a user; and/or
wherein the mobile device (200) comprises a human-machine interface configured to provide an indication to a user regarding the orientation of the LiDAR sensor.

7. The calibration system according to any of the preceding claims, wherein the LiDAR sensor is configured to determine a point cloud for the plurality of measurement points.

8. The calibration system according to any of the preceding claims, wherein the LiDAR sensor is part of a LiDAR scanner; and/or
wherein the LiDAR sensor is part of a LiDAR scanner configured to emit light in correspondence with a dot grid.

9. The calibration system according to any of the preceding claims, wherein the LiDAR sensor is configured to perform a distance measurement based on a light reflection and/or a time-of-flight measurement of a light reflection.

10. The calibration system according to any of the preceding claims, wherein the LiDAR sensor is configured to determine marked, color-coded and/or raised measurement points arranged on the construction machine (100, 101) or component (140, 150, 160, 161, 162, 163, 164, 165);
wherein the plurality of measurement points are formed by specific points of the component (140, 150, 160, 161, 162, 163, 164, 165) and/or the construction machine (100, 101) from a group, the group comprising the following specific points:
- joint
- virtual pivot
- fixed point
- contact point of the tool.

11. The calibration system according to any of the preceding claims, the calibration system comprising an interface (390) for wireless communication with a machine controller.

12. The calibration system according to any of the preceding claims, the calibration system comprising a machine controller and/or a machine display,
wherein the machine display is configured to calculate and/or display a position and/or positionings of the component (140, 150, 160, 161, 162, 163, 164, 165) based on one or more sensor data for monitoring one or more degrees of freedom while considering the 3D model;
wherein the machine controller is configured to calculate a position and/or positioning of the component (140, 150, 160, 161, 162, 163, 164, 165) based on one or more sensor data for monitoring one or more degrees of freedom while considering the 3D model.

13. A construction machine (100, 101), in particular an excavator, bulldozer, grader, drilling rig, pile driver or diaphragm wall cutter, comprising a calibration system according to any of the preceding claims, and a machine controller.

14. A method for calibrating a component (140, 150, 160, 161, 162, 163, 164, 165) of a construction machine (100, 101), in particular an excavator, a bulldozer, a grader, a drill rig, a pile driver or a diaphragm wall cutter, wherein the component (140, 150, 160, 161, 162, 163, 164, 165) comprises at least one degree of freedom, comprising:
detecting, by a LiDAR sensor of a mobile device (200), a plurality of measurement points of the component (140, 150, 160, 161, 162, 163, 164, 165) and/or the construction machine (100, 101) to determine position information for the plurality of measurement points of the component (140, 150, 160, 161, 162, 163, 164, 165) and/or the construction machine (100, 101);
determining a 3D model of the component (140, 150, 160, 161, 162, 163, 164, 165) and/or the construction machine (100, 101) based on the position information for the plurality of measurement points;
wherein the mobile device (200) is formed by a smart device, smartphone, or tablet PC; wherein detecting comprises recording the component (140, 150, 160, 161, 162, 163, 164, 165) and/or the construction machine (100, 101) by means of a camera in the mobile device (200).

15. The method of claim 14, wherein detecting comprises recording the component (140, 150, 160, 161, 162, 163, 164, 165) and/or the construction machine (100, 101) by means of a camera of the mobile device (200); and/or
the method comprising the step of calculating and/or displaying a position and/or positioning of the component (140, 150, 160, 161, 162, 163, 164, 165) based on one or more sensor data for monitoring one or more degrees of freedom while considering the 3D model.

16. A computer program for performing the method of claim 14 or 15, when the method runs on a processor according to a calibration system according to any of claims 1-13.

## Revendications

1. Système de mesure destiné à étalonner un composant (140, 150, 160, 161, 162, 163, 164, 165) d'une machine de construction (100, 101), en particulier d'une excavatrice, d'un bulldozer, d'une niveleuse, d'une foreuse, d'un engin de battage ou d'une fraiseuse de paroi moulée, le composant (140, 150, 160, 161, 162, 163, 164, 165) présentant au moins un degré de liberté, avec les caractéristiques suivantes :
un appareil mobile (200) avec un capteur LiDAR, le capteur LiDAR étant configuré pour détecter une pluralité de points de mesure du composant (140, 150, 160, 161, 162, 163, 164, 165) et/ou de la machine de construction (100, 101) afin de déterminer des informations de position pour la pluralité de points de mesure du composant (140, 150, 160, 161, 162, 163, 164, 165) et/ou de la machine de construction (100, 101) ;
un processeur qui est configuré pour déterminer un modèle 3D du composant (140, 150, 160, 161, 162, 163, 164, 165) et/ou de la machine de construction (100, 101) sur base des informations de position pour la pluralité de points de mesure ;
dans lequel l'appareil mobile (200) est formé par un dispositif intelligent, un téléphone intelligent ou une tablette PC ;
dans lequel la détection comprend le fait d'enregistrer le composant (140, 150, 160, 161, 162, 163, 164, 165) et/ou la machine de construction (100, 101) à l'aide d'une caméra dans l'appareil mobile (200).

2. Système de mesure selon la revendication 1, dans lequel les informations de position comprennent des informations de distance à partir du capteur LiDAR ; et/ou
dans lequel les informations de position comprennent des informations de position 3D dans l'espace ; et/ou
dans lequel les informations de position comprennent des informations de position 3D dans un système de coordonnées défini par le capteur LiDAR.

3. Système de mesure selon une des revendications précédentes, dans lequel le modèle 3D comprend des informations de profondeur ; et/ou
dans lequel une position 3D de chaque composant (140, 150, 160, 161, 162, 163, 164, 165) est déterminée par au moins deux points de mesure du composant (140, 150, 160, 161, 162, 163, 164, 165).

4. Système de mesure selon une des revendications précédentes, dans lequel le capteur LiDAR est configuré pour détecter les points de mesure dans une pluralité d'orientations du capteur LiDAR par rapport au composant (140, 150, 160, 161, 162, 163, 164, 165) et/ou à la machine de construction (100, 101) ; et/ou
dans lequel la détection de la pluralité de points de mesure est effectuée dans une pose du composant (140, 150, 160, 161, 162, 163, 164, 165) et/ou de la machine de construction (100, 101) ; ou dans lequel la détection des points de mesure est effectuée dans une pluralité de poses du composant (140, 150, 160, 161, 162, 163, 164, 165) et/ou de la machine de construction (100, 101).

5. Système de mesure selon une des revendications précédentes, dans lequel le capteur LiDAR est configuré pour déterminer des informations de position pour la pluralité de points de mesure de plusieurs composants (140, 150, 160, 161, 162, 163, 164, 165) avec une pluralité de degrés de liberté ; et/ou
dans lequel le processeur est configuré pour déterminer le modèle 3D incluant la pluralité de composants (140, 150, 160, 161, 162, 163, 164, 165).

6. Système de mesure selon une des revendications précédentes, dans lequel l'appareil mobile (200) présente une interface homme-machine qui permet de définir un ou une pluralité de points de mesure et/ou de les marquer par un utilisateur ; et/ou
dans lequel l'appareil mobile (200) présente une interface homme-machine qui est configurée pour donner à un utilisateur une indication sur l'orientation du capteur LiDAR.

7. Système de mesure selon une des revendications précédentes, dans lequel le capteur LiDAR est configuré pour déterminer un nuage de points pour la pluralité de points de mesure.

8. Système de mesure selon une des revendications précédentes, dans lequel le capteur LiDAR fait partie d'un scanner LiDAR ; et/ou
dans lequel le capteur LiDAR fait partie d'un scanner LiDAR qui est configuré pour émettre de la lumière en correspondance avec une grille de points.

9. Système de mesure selon une des revendications précédentes, dans lequel le capteur LiDAR est configuré pour réaliser une mesure de distance sur base d'une réflexion lumineuse et/ou une mesure de temps de vol d'une réflexion lumineuse.

10. Système de mesure selon une des revendications précédentes, dans lequel le capteur LiDAR est configuré pour déterminer des points de mesure marqués, marqués de manière colorée et/ou surélevés et disposés sur la machine de construction (100, 101) ou le composant (140, 150, 160, 161, 162, 163, 164, 165) ;
dans lequel la pluralité de points de mesure sont formés par des points spécifiques du composant (140, 150, 160, 161, 162, 163, 164, 165) et/ou de la machine de construction (100, 101) à partir d'un groupe, le groupe comprenant les points spécifiques suivants :
- articulation
- pivot virtuel
- point fixe
- point de contact de l'outil.

11. Système de mesure selon une des revendications précédentes, dans lequel le système de mesure présente une interface (390) de communication sans fil avec une commande de machine.

12. Système de mesure selon une des revendications précédentes, dans lequel le système de mesure présente une commande de machine et/ou un affichage de machine,
dans lequel l'affichage de machine est configuré pour calculer et/ou afficher la position et/ou des positionnements du composant (140, 150, 160, 161, 162, 163, 164, 165) sur base d'une ou d'une pluralité de données de capteur pour surveiller un ou une pluralité de degrés de liberté en prenant en considération le modèle 3D ;
dans lequel la commande de machine est configurée pour calculer la position et/ou le positionnement du composant (140, 150, 160, 161, 162, 163, 164, 165) sur base d'une ou d'une pluralité de données de capteur pour surveiller un ou une pluralité de degrés de liberté en prenant en considération le modèle 3D.

13. Machine de construction (100, 101), en particulier excavatrice, bulldozer, niveleuse, foreuse, engin de battage ou fraiseuse de paroi moulée, avec un système de mesure selon une des revendications précédentes ainsi qu'une commande de machine.

14. Procédé destiné à mesurer un composant (140, 150, 160, 161, 162, 163, 164, 165) d'une machine de construction (100, 101), en particulier d'une excavatrice, d'un bulldozer, d'une niveleuse, d'une foreuse, d'un engin de battage ou d'une fraiseuse de paroi moulée, dans lequel le composant (140, 150, 160, 161, 162, 163, 164, 165) présente au moins un degré de liberté, avec les étapes suivantes :
détecter à l'aide d'un capteur LiDAR d'un appareil mobile (200) une pluralité de points de mesure du composant (140, 150, 160, 161, 162, 163, 164, 165) et/ou de la machine de construction (100, 101) afin de déterminer des informations de position pour la pluralité de points de mesure du composant (140, 150, 160, 161, 162, 163, 164, 165) et/ou de la machine de construction (100, 101) ;
déterminer un modèle 3D du composant (140, 150, 160, 161, 162, 163, 164, 165) et/ou de la machine de construction (100, 101) sur base des informations de position pour la pluralité de points de mesure :
dans lequel l'appareil mobile (200) est formé par un dispositif intelligent, un téléphone intelligent ou une tablette PC, dans lequel la détection comprend le fait d'enregistrer le composant (140, 150, 160, 161, 162, 163, 164, 165) et/ou la machine de construction (100, 101) à l'aide d'une caméra dans l'appareil mobile (200).

15. Procédé selon la revendication 14, dans lequel la détection comprend l'étape destinée à enregistrer le composant (140, 150, 160, 161, 162, 163, 164, 165) et/ou la machine de construction (100, 101) à l'aide d'une caméra de l'appareil mobile (200) ; et/ou
dans lequel le procédé comprend l'étape destinée à calculer et/ou afficher une position et/ou un positionnement du composant (140, 150, 160, 161, 162, 163, 164, 165) sur base d'une ou de plusieurs données de capteur pour surveiller un ou une pluralité de degrés de liberté en prenant en considération le modèle 3D.

16. Programme d'ordinateur destiné à réaliser le procédé selon la revendication 14 ou 15, lorsque le procédé est exécuté sur un processeur selon un système de mesure selon une des revendications 1 à 13.
